# EUROPÄISCHE PATENTSCHRIFT

(11) **EP 2 740 168 B1**
(45) Veröffentlichungstag und Bekanntmachung des Hinweises auf die Patenterteilung: **14.10.2015**
(21) Anmeldenummer: 12737219.1
(22) Anmeldetag: 18.07.2012
(51) Int. Cl.: H01M 2/02, H01M 2/20, H01M 2/22, H01M 2/30, H01M 10/04, H01M 10/613, H01M 10/647, H01M 10/6551, H01M 10/6553

(54) **EINZELZELLE FÜR EINE BATTERIE**
SINGLE CELL FOR A BATTERY
ÉLÉMENT INDIVIDUEL POUR UNE BATTERIE

(30) Priorität: 02.08.2011 DE 102011109218
(43) Veröffentlichungstag der Anmeldung: 11.06.2014
(73) Patentinhaber: Daimler AG, 70327 Stuttgart (DE)
(72) Erfinder: MEINTSCHEL, Jens, 02994 Bernsdorf (DE); SCHRÖTER, Dirk, 71364 Winnenden (DE)
(74) Vertreter: JENSEN & SON
(86) Internationale Anmeldenummer: PCT/EP2012/003024
(87) Internationale Veröffentlichungsnummer: WO 2013/017207

(56) Entgegenhaltungen:
- WO-A1-2009/018940
- DE-A1-102009 005 497
- DE-A1-102009 037 850

## Beschreibung

Die Erfindung betrifft eine Einzelzelle für eine Batterie nach den Merkmalen des Oberbegriffs des Anspruchs 1.

Aus dem Stand der Technik sind Batterien, insbesondere Hochvolt-Batterien für die Verwendung in einem Fahrzeug bekannt, die eine Vielzahl von in Reihe und/oder in Serie geschalteten Einzelzellen aufweisen. Dabei sind die Einzelzellen im Allgemeinen zusammen mit einer Steuerungs- und/oder Überwachungselektronik und einer Kühlungsvorrichtung in einem gemeinsamen Batteriegehäuse angeordnet. Für die Einzelzellen sind verschiedene Bauformen bekannt und gebräuchlich.

Als Einzelzellen werden bevorzugt herkömmliche bipolare Rahmenflachzellen verwendet. Eine solche Zelle wird von zwei planaren metallischen Hüllblechen umhüllt. In einer bevorzugten Ausführungsform kann mindestens eines dieser Hüllbleche in Schalenform ausgeführt sein. Die Gehäuseseitenwände sind durch einen elektrisch isolierenden Rahmen voneinander getrennt und dienen gleichzeitig als Pole der Einzelzelle zur Einleitung oder Entnahme von elektrischer Energie. Die Verlustwärme der Einzelzelle wird über die entsprechend aufgedickten Hüllbleche bzw. Gehäuseseitenwände an eine Schmalseite der Einzelzelle geleitet und an eine Kühlplatte abgegeben, die von Klimakühlmittel oder einer Kühlflüssigkeit durchströmt wird. Zur elektrischen Isolation von Hüllblech oder Gehäuseseitenwand und der metallischen Kühlplatte, welche vorzugsweise mit Kanälen für ein Kühlmittel versehen ist, ist dazwischen eine Wärmeleitfolie angeordnet. Zur Verbesserung des Wärmeübergangs sind Hüllbleche oder Gehäuseseitenwand im Bereich der Kühlplatte parallel zu dieser um 90° als Kühlfahne abgekantet. Über diesen Wärmeleitpfad ist außerdem bedarfsweise eine Beheizung der bei niedrigen Außentemperaturen, ermöglicht. Hierzu wird die metallische Kühlplatte z.B. von einem erwärmten Kühlmittel durchströmt.

Zum Verschluss der Einzelzelle wird vorzugsweise ein Heißpressverfahren eingesetzt. Dafür sind Rahmen oder Teile desselben mindestens im Bereich einer Siegelnaht aus einem thermoplastischen Material gebildet.

Der elektrochemisch aktive Teil der Einzelzelle ist der Elektrodenstapel oder -wickel, der durch Lagen aus Kathoden- und Anodenfolien gebildet wird, die jeweils durch Separatorlagen getrennt werden. Beispielsweise werden bei einer Lithium-Ionen-Zelle beschichtete Alu- und Kupferfolien verwendet. Anoden- und Kathodenfolien sind an mindestens einem Rand unbeschichtet und ragen aus dem Elektrodenstapel fahnenartig heraus und werden miteinander zu einer Stromableiterfahne verbunden. Die Stromableiterfahnen werden mit der Innenseite des Hüllblechs oder der Innenseite der Gehäuseseitenwand verbunden um eine elektrische Koppelung zu ermöglichen. Hierzu kommen herkömmliche Press- oder Schmelzschweißverfahren, beispielsweise Widerstandspunktschweißen, Ultraschallschweißen oder Laserschweißen, zum Einsatz. Alternativ oder zusätzlich kann eine kraftschlüssige Verbindung, beispielsweise eine Nietverbindung, vorgesehen werden.

In einer möglichen Ausführung werden die bipolaren Rahmenflachzellen durch Verschweißung der Hüllbleche oder der Gehäuseseitenwände der im Zellblock nebeneinander angeordneten Einzelzellen elektrisch in Reihe geschaltet. Hierzu sind die Oberseiten der Hüllbleche oder der Gehäuseseitenwände mit zungenartigen Verlängerungen versehen, die über die Hüllkontur der Einzelzelle hinausragen und beispielsweise durch ein Pressschweißverfahren verbunden werden.

Aus der WO 2009/018940 A1 ist eine Einzelzelle für eine Batterie mit einem innerhalb eines Zellengehäuses angeordneten Elektrodenstapel bekannt, wobei das Zellengehäuse aus zwei elektrisch leitenden, im Wesentlichen parallel gegenüberliegend angeordneten und schalenförmig mit einem randseitig umlaufenden Schalenflansch ausgebildeten Gehäuseseitenwänden ausgeformt ist. Die Schalenflansche sind unter Ausbildung eines Flanschbereichs stoffschlüssig miteinander verbunden und elektrisch voneinander isoliert, wobei Polkontaktfahnen des Elektrodenstapels elektrisch leitend mit den Gehäuseseitenwänden verbunden sind. Eine der Gehäuseseitenwände ist den Flanschbereich zumindest einer Gehäusekante des Zellengehäuses zumindest abschnittsweise überragend ausgebildet, wobei der den Flanschbereich überragende Abschnitt der Gehäuseseitenwand in Richtung eines Zellinneren und in Richtung eines Schalenbodens der Gehäuseseitenwand abgewinkelt ist und im abgewinkelten Zustand den betreffenden Schalenboden um einen vorgebbaren Wert überragt.

Der Erfindung liegt die Aufgabe zugrunde, eine verbesserte Einzelzelle für eine Batterie anzugeben.

Die Aufgabe wird erfindungsgemäß durch eine Einzelzelle mit den Merkmalen des Anspruchs 1 gelöst.

Bei der Einzelzelle für eine Batterie mit einem innerhalb eines Zellengehäuses angeordneten Elektrodenstapel, wobei das Zellengehäuse aus zwei elektrisch leitenden, im Wesentlichen parallel gegenüberliegend angeordneten und schalenförmig mit einem randseitig umlaufenden Schalenflansch ausgebildeten Gehäuseseitenwänden ausgeformt ist, wobei die Schalenflansche unter Ausbildung eines Flanschbereichs stoffschlüssig miteinander verbunden und elektrisch voneinander isoliert sind, wobei Polkontaktfahnen des Elektrodenstapels elektrisch leitend mit den Gehäuseseitenwänden verbunden sind, ist erfindungsgemäß zumindest eine der Gehäuseseitenwände den Flanschbereich zumindest einer Gehäusekante des Zellengehäuses zumindest abschnittsweise überragend ausgebildet, wobei der den Flanschbereich überragende Abschnitt der Gehäuseseitenwand in Richtung eines Zellinneren und in Richtung eines Schalenbodens der Gehäuseseitenwand abgewinkelt ist und im abgewinkelten Zustand den betreffenden Schalenboden um einen vorgebbaren Wert überragt. Um einen möglichst hohen Wärmeübergang von der Einzelzelle zur Kühlplatte und/oder eine einfache elektrische und thermische Koppelung benachbarter Einzelzellen in einem Zellblock zu ermöglichen, weist zumindest eine der Gehäuseseitenwände des Zellengehäuses abschnittsweise einen den Flanschbereich hinausgehenden Abschnitt auf, der in Richtung zum Zelleninneren abgewinkelt ist. Durch eine hieraus resultierende, gegenüber herkömmlichen Einzelzellen vergrößerte Gehäuseoberfläche ist die Wärmeübergangsfläche ebenfalls vergrößert und somit eine verbesserte Kühlung der Einzelzellen ermöglicht.

Erfindungsgemäß ist die Gehäuseseitenwand an zwei gegenüberliegenden Gehäusekanten des Zellengehäuses zumindest abschnittsweise den Flanschbereich überragend ausgebildet, wobei die überragenden Abschnitte zueinander in Richtung zum Zelleninneren abgewinkelt sind. Somit werden zwei gegenüberliegende Gehäusekanten für einen Wärmeübergang und eine daraus resultierende verbesserte Wärmeableitung aus der Einzelzelle verwendet.

Vorteilhafterweise ist der den Flanschbereich überragende Abschnitt der Gehäuseseitenwand rechtwinklig oder nahezu rechtwinklig gegenüber dem Schalenboden abgewinkelt. Dies ermöglicht eine ebene oder nahezu ebene Fläche, an der auf einfache Art und Weise eine herkömmliche Kühlplatte anordenbar ist.

Besonders bevorzugt sind die den Flanschbereich überragenden Abschnitte benachbarter Gehäuseseitenwände unterschiedlicher Polarität korrespondierend zueinander ausgebildet. Dadurch können nebeneinander im Zellblock angeordnete Einzelzellen einfach elektrisch kontaktiert werden.

Eine nicht erfindungsgemäße Batterie umfasst eine Mehrzahl elektrisch seriell und/oder parallel miteinander verbundener Einzelzellen, wobei die Einzelzellen, insbesondere Flachzellen, vorzugsweise dicht hintereinander angeordnet und parallel zueinander ausgerichtet sind. Dadurch ist eine optimal Bauraum sparende Anordnung der Einzelzellen erreicht. Da Zellpole der Einzelzellen auf den Gehäuseseitenwänden des Zellengehäuses liegen, sind die Einzelzellen vorzugsweise durch eine Koppelung von Gehäuseseitenwänden, die eine unterschiedliche Polarität aufweisen, elektrisch seriell miteinander verbindbar. Auf diese Weise ist eine optimale Kontaktierung der Einzelzellen im Zellblock erreichbar und eine Fertigung der Batterie erheblich erleichtert.

Besonders bevorzugt sind die Einzelzellen derart nebeneinander im Zellblock angeordnet, dass die den Flanschbereich überragenden, abgewinkelten Abschnitte der Gehäuseseitenwände benachbart im Zellblock angeordneter Einzelzellen zumindest abschnittsweise einander überlappend angeordnet sind. Dadurch können die den Flanschbereich überragenden, abgewinkelten Abschnitte der Gehäuseseitenwände sowohl als Befestigungselement als auch als Kontaktierungselement verwendet werden. Aufgrund dieser Ausbildung als Befestigungs- und Kontaktierungselement als ein Formteil mit der jeweiligen Einzelzelle sind in besonders vorteilhafter Weise keine zusätzlichen separaten Bauteile als Befestigungs- und Kontaktierungselemente erforderlich. Daraus resultiert neben einer vereinfachten Handhabbarkeit der Batterie bei deren Montage auch eine Gewichts- und Kosteneinsparung. Auch ist eine Verkürzung der Montagezeit der Batterie erzielbar.

Die den Flanschbereich überragenden, abgewinkelten Abschnitte der Gehäuseseitenwände benachbart im Zellblock angeordneter Einzelzellen sind in ihrem Überlappungsbereich vorteilhafterweise form-, stoff- und/oder kraftschlüssig miteinander verbunden. Die Verbindung der abgewinkelten Abschnitte kann beispielsweise mittels Ultraschall-Schweißung erfolgen. Hierbei umgreift das Schweißwerkzeug, bestehend aus der hochfrequent bewegten Sonotrode und dem ruhenden Amboss beide zu verbindenden abgewinkelten Abschnitte der benachbarten Gehäuseseitenwände.

Um den mechanischen Druck eines den Zellblock umlaufenden Spannmittels gleichmäßig stirnseitig in den Zellblock einzuleiten, ist endseitig des Zellblocks bevorzugt jeweils eine herkömmliche Druckbrille angeordnet.

Der Zellblock ist mit zumindest einer Kühlplatte thermisch gekoppelt, wobei die Kühlplatte korrespondierend zum Zellblock ausgeformt und im Bereich der überlappend angeordneten Abschnitte der benachbarten Gehäuseseitenwände form- und/oder kraftschlüssig am Zellblock angeordnet ist. Bevorzugt sind die abgewinkelten und überlappend angeordneten Abschnitte der benachbarten Gehäuseseitenwände parallel zur Kühlplatte angeordnet. Hierdurch kann die Wärme einfach und effektiv über die angrenzende Kühlplatte mit einer hohen Wärmeübergangsfläche abgeführt werden, so dass die Einzelzellen und somit die Batterie gut temperierbar sind. Zur Befestigung der Kühlplatte am Zellblock kann beispielweise eine formschlüssige Verklammerung verwendet werden.

Die Batterie, insbesondere eine Fahrzeugbatterie, ist in einem Fahrzeug mit Hybridantrieb und/oder in einem mit Brennstoffzellen betriebenen Fahrzeug, insbesondere für ein Kraftfahrzeug zur Personenbeförderung, einsetzbar.

Ausführungsbeispiele der Erfindung werden im Folgenden anhand von Zeichnungen näher erläutert.

Dabei zeigen:
- Fig. 1: schematisch eine Explosionsdarstellung einer Einzelzelle mit zwei Gehäuseseitenwänden und einem dazwischen angeordneten Rahmen,
- Fig. 2: schematisch eine Schnittdarstellung der Einzelzelle gemäß Figur 1,
- Fig. 3: schematisch zwei Einzelzellen vor einer stoffschlüssigen Verbindung,
- Fig. 4: schematisch eine perspektivische Darstellung einer Verschweißung zweier Einzelzellen,
- Fig. 5: schematisch eine Seitenansicht einer Verschweißung zweier Einzelzellen,
- Fig. 6: schematisch eine Explosionsdarstellung eines Zellblocks und.der Hochvoltkontakte,
- Fig. 7: schematisch eine perspektivische Darstellung einer stirnseitigen Anordnung und Verschweißung der Hochvoltkontakte am Zellblock,
- Fig. 8: schematisch eine Explosionsdarstellung eines Zellblocks, stirnseitiger Druckbrillen und Spannmittel,
- Fig. 9: schematisch eine Explosionsdarstellung eines Zellblocks mit daran angeordneten Druckbrillen und Spannmittel, einer Wärmeleitfolie und einer Kühlplatte,
- Fig. 10: schematisch eine Seitenansicht eines Zellblocks mit daran angeordneten Druckbrillen und Spannmittel, einer Wärmeleitfolie und einer Kühlplatte,
- Fig. 11: schematisch eine Explosionsdarstellung eines Zellblocks mit daran angeordneter Kühlplatte und Spannklemmen und
- Fig. 12: schematisch eine perspektivische Darstellung eines Zellblocks mit daran mittels einer Mehrzahl von Spannklemmen angeordneter Kühlplatte.

Einander entsprechende Teile sind in allen Figuren mit den gleichen Bezugszeichen versehen.

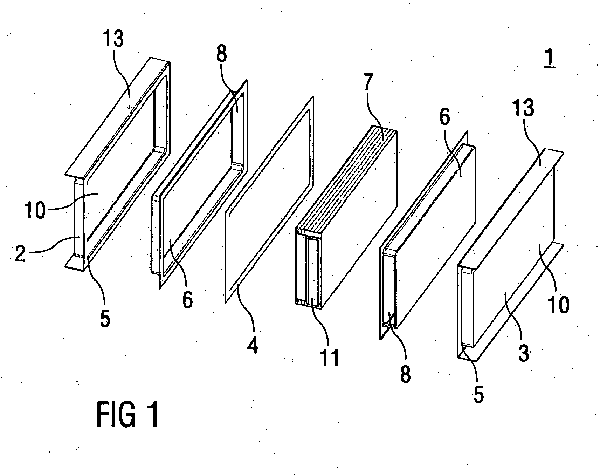

Figur 1 zeigt schematisch eine Explosionsdarstellung einer Einzelzelle 1 mit zwei Gehäuseseitenwänden 2, 3 und einem dazwischen angeordneten Rahmen 4. Ein Zellengehäuse der Einzelzelle 1 umfasst zwei Gehäuseseitenwände 2, 3, eine erste Gehäuseseitenwand 2 und ein zweite Gehäuseseitenwand 3. Zumindest eine der Gehäuseseitenwände 2, 3 ist als eine Halbschale ausgebildet, die andere Gehäuseseitenwand 2, 3 kann als herkömmliches, nicht dargestelltes Hüllblech, beispielsweise als eine ebene Platte, ausgebildet sein. Im Darstellungsbeispiel nach Figur 1 sind beide Gehäuseseitenwände 2, 3 schalenförmig ausgebildet. Die beiden Gehäuseseitenwände 2, 3 weisen jeweils einen randseitig umlaufenden Schalenflansch 5 auf.

Zur elektrischen Isolation ist zwischen den beiden Gehäuseseitenwänden 2, 3 der Rahmen 4 angeordnet. Der Rahmen 4 ist korrespondierend zum Schalenflansch 5 ausgebildet.

An jeder Gehäuseseitenwand 2, 3 ist innenseitig der Einzelzelle 1 ein Isolationsmittel 6 angeordnet, welches korrespondierend zur jeweiligen Gehäuseseitenwand 2, 3 ausgebildet ist. Das heißt, das Isolationsmittel 6 ist ebenfalls schalenförmig ausgeführt und weist zu den Abmessungen der Gehäuseseitenwand 2, 3 korrespondierende Abmessungen auf, wobei das Isolationsmittel 6 die jeweilige Gehäuseseitenwand 2, 3 innenseitig der Einzelzelle 1 weitgehend vollständig bedeckt. Zur elektrischen Kontaktierung eines Elektrodenstapel 7 mit der Gehäuseseitenwand 2, 3 weist das Isolationsmittel 6 eine Aussparung 8 auf.

Durch die schalenförmige Ausbildung der beiden Gehäuseseitenwände 2, 3 und eine daraus resultierende Beabstandung der Schalenböden 10 der Gehäuseseitenwände 2, 3 ist ein Zellinneres 9 gebildet. Innerhalb des Zellinneren 9 ist der Elektrodenstapel 7 angeordnet. Dabei entspricht der Abstand der beiden Schalenböden 10 vorzugsweise der Höhe des Elektrodenstapels 7, so dass eine kompakte Bauform der Einzelzelle 1 ermöglicht ist.

Der herkömmliche Elektrodenstapel 7 ist aus Elektrodenfolien unterschiedlicher Polarität gebildet. Die Elektrodenfolien sind mittels eines nicht näher dargestellten Seperators, insbesondere einer Seperatorfolie voneinander elektrisch isoliert. Einer bevorzugten Ausbildung der Erfindung zufolge ist der Elektrodenstapel 7 aus übereinander gestapelten Aluminium- und/oder Kupferfolien und/oder Folien aus einer Metalllegierung gebildet.

Die Elektrodenfolien des Elektrodenstapels 7 einer Polarität sind mit elektrischen leitfähigen Stromableiterfahnen kontaktiert, die insbesondere mittels einer Verpressung und/oder Verschweißung zu einer Polkontaktfahne 11 zusammengefasst sind. Jeweils eine Polkontaktfahne 11 einer Polarität ist insbesondere mittels einer Verschweißung mit jeweils einer Gehäuseseitenwand 2, 3 elektrisch leitfähig verbunden, so dass die beiden Gehäuseseitenwände 2, 3 als elektrische Pole der Einzelzelle 1 dienen.

Zur Kontaktierung der Polkontaktfahne 11 mit der jeweiligen Gehäuseseitenwand 2, 3 weist das jeweilige Isolationsmittel 6 eine Aussparung 8 auf. Dabei korrespondieren die Abmessungen der Aussparung 8 mit den Abmessungen der Polkontaktfahne 11.

Darüber hinaus dienen die Gehäuseseitenwände 2, 3 als so genannte Wärmeleitbleche, mittels derer innerhalb der Einzelzelle 1 insbesondere während des Ladens und/oder Entladens entstehende Wärme abführbar ist.

Bei einer Montage der Einzelzelle 1 werden die Schalenflansche 5 der Gehäuseseitenwände 2, 3 unter Ausbildung eines Flanschbereichs 12 stoffschlüssig miteinander verbunden und sind mittels des Rahmens 4 elektrisch voneinander isoliert. Die Verbindung der beiden Gehäuseseitenwände 2, 3 erfolgt vorzugsweise durch einen Heißsiegelvorgang. Hierbei wird der im Flanschbereich 12 angeordnete Rahmen 4 aus Kunststoff mit niedriger Schmelztemperatur in der Heißpresse partiell aufgeschmolzen. Bei Erstarrung des Rahmens 4 bei fallender Temperatur und/oder unter Druck werden die beiden Gehäuseseitenwände 2, 3 miteinander verbunden.

Erfindungsgemäß ist die jeweilige Gehäuseseitenwand 2, 3 an zwei gegenüberliegenden Gehäusekanten des Zellengehäuses zumindest abschnittsweise den Flanschbereich 12 überragend ausgebildet. Dabei ist der den Flanschbereich 12 überragende Abschnitt 13 der Gehäuseseitenwand 2, 3 in Richtung des Zellinneren 9 und in Richtung des Schalenbodens 10 der jeweiligen Gehäuseseitenwand 2, 3 abgewinkelt. Dabei überragt der Abschnitt 13 im abgewinkelten Zustand den Schalenboden 10 um einen vorgebbaren Wert.

Besonders bevorzugt ist der den Flanschbereich 12 überragende Abschnitt 13 der jeweiligen Gehäuseseitenwand 2, 3 rechtwinklig oder nahezu rechtwinklig gegenüber dem Schalenboden 10 abgewinkelt.

In einer vorteilhaften Ausführungsform sind die den Flanschbereich 12 überragenden, abgewinkelten Abschnitte 13 benachbarter Gehäuseseitenwände 2, 3 unterschiedlicher Polarität korrespondierend zueinander ausgebildet. Beispielsweise weisen die Abschnitte 13 einen unterschiedlichen Abstand zum jeweiligen Schalenboden 10 auf, so dass eine überlappende Anordnung der Abschnitte 13 benachbarter Gehäuseseitenwände 2, 3 unterschiedlicher Polarität ermöglicht ist.

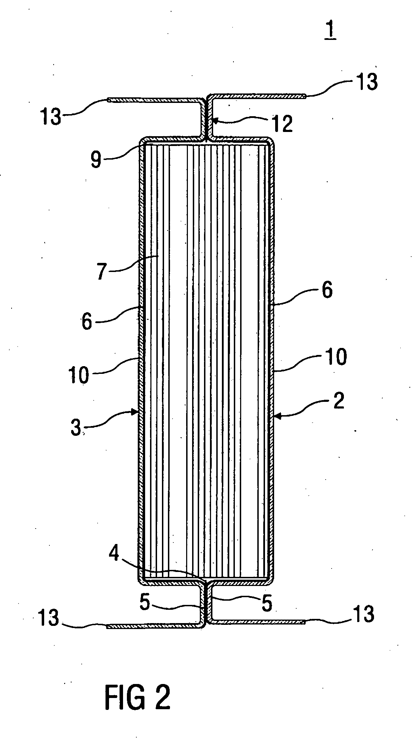

Figur 2 zeigt schematisch eine Schnittdarstellung der Einzelzelle 1 gemäß Figur 1.

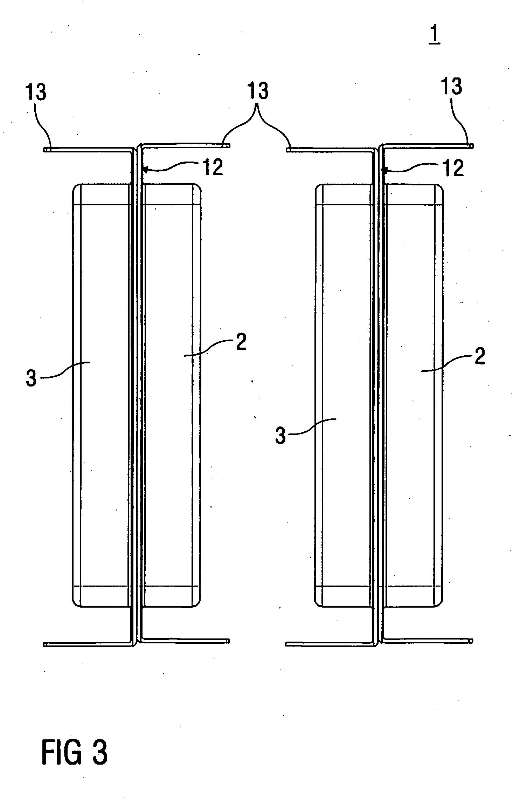

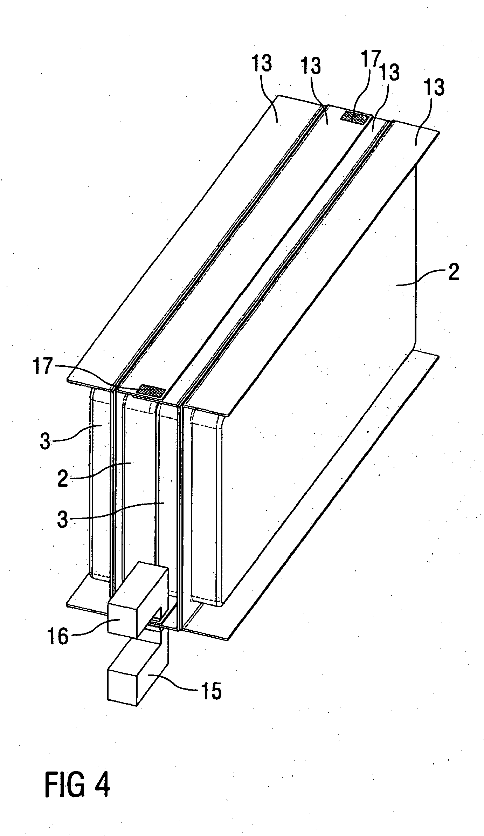

Figur 3 zeigt schematisch zwei nebeneinander angeordnete Einzelzellen 1 vor einer stoffschlüssigen Verbindung und Figur 4 zeigt schematisch eine perspektivische Darstellung einer Verschweißung zweier Einzelzellen 1 im Bereich der abgewinkelten Abschnitte 13.

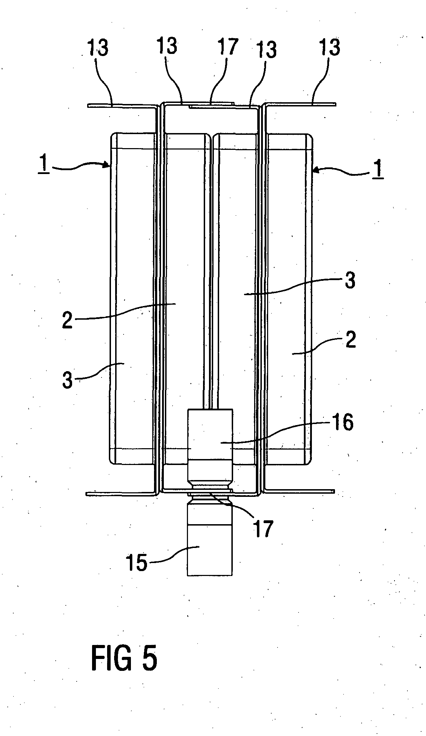

In Figur 5 ist schematisch eine Seitenansicht einer Verschweißung zweier Einzelzellen 1 dargestellt.

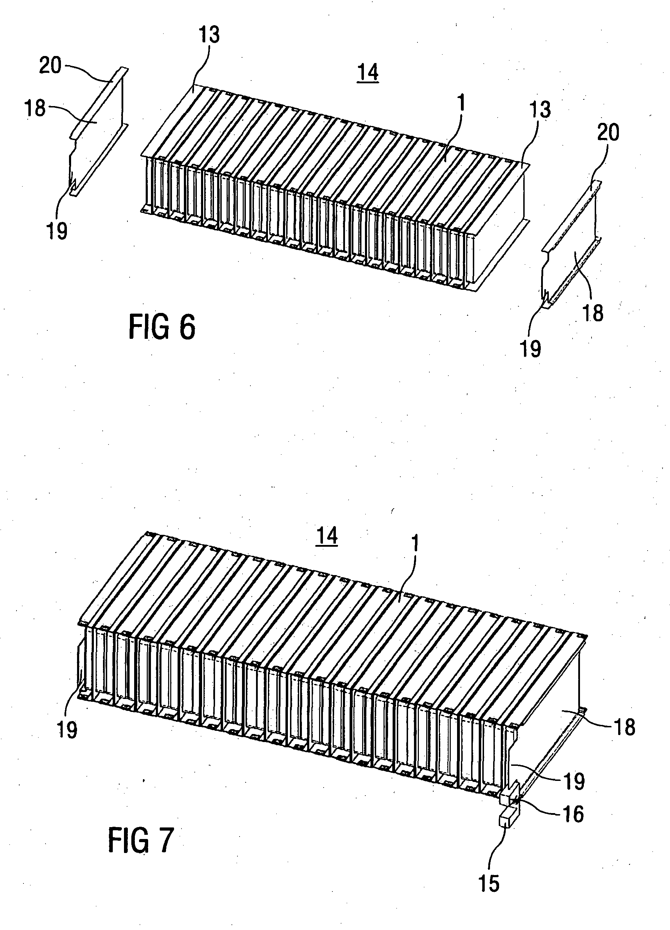

Zur Herstellung eines in Figur 7 dargestellten Zellblocks 14 sind die Einzelzellen 1 im dargestellten Ausführungsbeispiel elektrisch in Reihe miteinander verschaltet, wobei bei dieser Reihenschaltung eine elektrische Verbindung der Einzelzellen 1 durch eine Kontaktierung der Abschnitte 13 direkt benachbarter Einzelzellen 1 erreicht wird.

Die Einzelzellen 1 sind derart nebeneinander im Zellblock 14 angeordnet, dass die den Flanschbereich 12 überragenden, abgewinkelten Abschnitte 13 der Gehäuseseitenwände 2, 3 benachbart im Zellblock 14 angeordneter Einzelzellen 1 zumindest abschnittsweise einander überlappend angeordnet sind. Nach der überlappenden Anordnung der abgewinkelten Abschnitte 13 der Gehäuseseitenwände 2, 3 benachbart im Zellblock 14 angeordneter Einzelzellen 1 werden selbige in ihrem Überlappungsbereich form-, stoff- und/oder kraftschlüssig miteinander verbunden, wie in Figur 4 und 5 dargestellt.

Die Verbindung der abgewinkelten Abschnitte 13 erfolgt vorzugsweise stoffschlüssig, bevorzugt durch ein herkömmliches Pressschweißverfahren. In alternativen Ausführungsformen kann die Verbindung formschlüssig, beispielsweise durch herkömmliches Clinchen oder Toxen, und/oder kraftschlüssig, beispielsweise durch herkömmliches Nietung oder Verschrauben, erfolgen.

Die derartige Verbindung benachbarter Einzelzellen 1 ermöglicht einen elektrischen Kontakt zwischen den Einzelzellen 1 und die mechanische Bildung eines Zellblocks 14 aus mehreren Einzelzellen 1. Zur Verbesserung der mechanischen Belastbarkeit kann die Verbindung der abgewinkelten Abschnitte 13 zusätzlich an der gegenüberliegenden Gehäusekante der Zellengehäuse erfolgen.

Die Verbindung der abgewinkelten Abschnitte 13 erfolgt besonders bevorzugt mittels einer herkömmlichen Ultraschall-Schweißung. Hierbei greift das Schweißwerkzeug, bestehend aus der hochfrequent bewegten Sonotrode 15 und dem ruhenden Amboss 16, seitlich in die unterhalb der Schalenflansche 5 vorhandenen Spalte. Anschließend wird die hochfrequent schwingende Sonotrode 15 gegen den Amboss 16 gepresst, wodurch die überlappend angeordneten abgewinkelten Abschnitte 13 aneinander gepresst werden, so dass die abgewinkelten Abschnitte 13 lokal durch Reibungswärme auf- oder anschmelzen und verpresst werden, wobei eine stoffschlüssige Verbindung ausgebildet wird.

Während des Schweißens können eine oder mehrere Schweißnähte und/oder Schweißpunkte 17 erzeugt werden. Besonders bevorzugt wird jeweils ein Schweißpunkt 17 an jeder Seite der benachbarten Einzelzellen 1 erzeugt.

Die in Längsrichtung des Zellblocks 14 überlappend angeordneten und abgewinkelten Abschnitte 13 ermöglichen vorteilhafterweise einen einfachen Toleranzausgleich von Einzelzellen 1 unterschiedlicher Zelldicke: So kann trotz unterschiedlicher Zelldicken, welche beispielsweise durch Fertigungstoleranzen bedingt sind, ein einheitliches Rastermaß im Zellblock 14 eingestellt werden.

In Figur 6 ist schematisch eine Explosionsdarstellung eines Zellblocks 14 und der Hochvoltkontakte 18 dargestellt.

Figur 7 zeigt schematisch eine perspektivische Darstellung einer stirnseitigen Anordnung und Verschweißung der Hochvoltkontakte 18 am Zellblock 14.

Zur mechanischen Bildung eines aus den Einzelzellen 1 bestehenden Zellblocks 14 werden die Einzelzellen 1 bei der elektrischen Reihenschaltung nebeneinander angeordnet. Randseitig, d. h. an der ersten und letzen Einzelzelle 1 des Zellblocks 14, ist jeweils ein Hochvoltkontakt 18 angeordnet, welcher als Hochvolt-Anschluss der Batterie, insbesondere zur Kopplung dieser mit nicht näher dargestellten elektrischen Verbrauchern und einem Bordnetz des Fahrzeugs, ausgebildet ist. Zu dieser Kopplung weisen die Hochvoltkontakte 18 jeweils eine über die Einzelzellen 1 hinausragende fahnenartige Verlängerung 19 auf, welche als elektrischer Anschlusskontakt dient.

Die Hochvoltkontakte 18 sind als Blechprägeteile ausgebildet und weisen abgewinkelte Abschnitte 20 auf, welche korrespondierend zu den abgewinkelten Abschnitten 13 der Einzelzellen 1 ausgeformt sind. Bei der endseitigen Anordnung der Hochvoltkontakte 18 am Zellblock 14 werden die Abschnitte 20 des Hochvoltkontakts 18 und die Abschnitte 13 der Einzelzelle 1 überlappend angeordnet und in der beschriebenen Art und Weise stoffschlüssig verbunden.

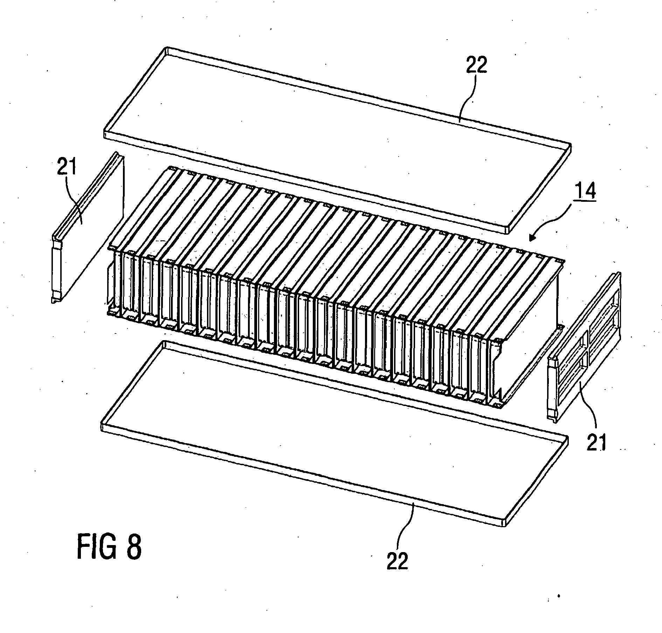

Figur 8 zeigt schematisch eine Explosionsdarstellung eines Zellblocks 14, stirnseitiger Druckbrillen 21 und Spannmittel 22. Zur Erhöhung der mechanischen Stabilität des Zellblocks 14, insbesondere um bei einem Druckanstieg im Zellinneren 9 der Einzelzellen 1, beispielsweise bedingt durch Kurzschluss und/oder Überladung, die Zerstörung des Zellblocks 14 zu vermeiden, ist der Zellblock 14 mit herkömmlichen Druckbrillen 21 und zumindest einem den Zellblock und die Druckbrillen 21 umlaufenden Spannmittel 22 verpresst. Das Spannmittel 22 ist bevorzugt als herkömmliches Spannband ausgebildet. Die endseitig am Zellblock 14 angeordneten und korrespondierend zu diesem ausgeformten Druckbrillen 21 ermöglichen eine gleichmäßige Einleitung des vom Spannmittel 22 aufgebrachten mechanischen Drucks in den Zellblock 14.

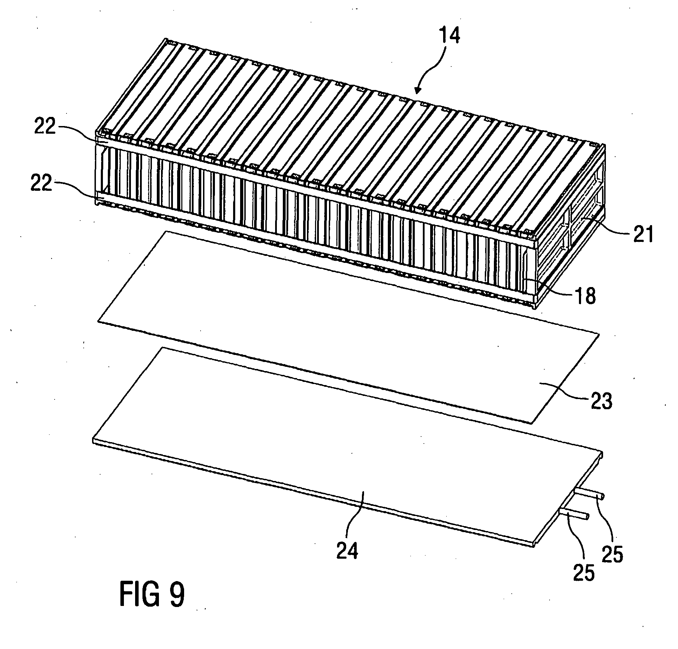

Figur 9 zeigt schematisch eine Explosionsdarstellung eines Zellblocks 14 mit daran angeordneten Druckbrillen 21 und Spannmittel 22, einer Wärmeleitfolie 23 und einer Kühlplatte 24. Zur Ableitung einer während des Betriebs des Zellblocks 14 entstehenden Verlustwärme, welche insbesondere während der Lade- und Entladevorgänge entsteht, ist der Zellblock 14 Wärme leitend mit der Kühlplatte 24 gekoppelt.

Da die Kühlplatte 24 vorzugsweise aus einem sehr gut wärmeleitfähigen und deshalb insbesondere aus einem metallischen Material gebildet ist, ist zwischen dem Zellblock 14 und der Kühlplatte 24 vorzugsweise ein elektrisch isolierendes und wärmeleitfähiges Material, im dargestellten Ausführungsbeispiel eine Wärmeleitfolie 23, eingebracht.

Die Kühlplatte 24 weist in einem nicht dargestellten Inneren Kanäle auf, welche von einem Kühlmedium durchströmt werden. Dabei ist die Kühlplatte 24 für eine hohe Wärmeabgabe vorzugsweise von einem Kühlmedium, beispielsweise einem Kältemittel einer Fahrzeugklimaanlage, durchströmbar, wobei die Kühlplatte 24 Anschlusselemente 25 zur Einbindung in einen derartigen Kühlkreislauf aufweist.

Die Kühlplatte 24 ist im Bereich der abgewinkelten Abschnitte 13 der Einzelzellen 1 am Zellblock-14 angeordnet und thermisch mit den Abschnitten 13 gekoppelt. Im dargestellten Ausführungsbeispiel ist die Kühlplatte 24 an der Unterseite des Zellblocks 14 angeordnet.

In einer nicht dargestellten Ausführungsform kann eine zweite Kühlplatte 24 oberseitig am Zellblock 14 angeordnet werden.

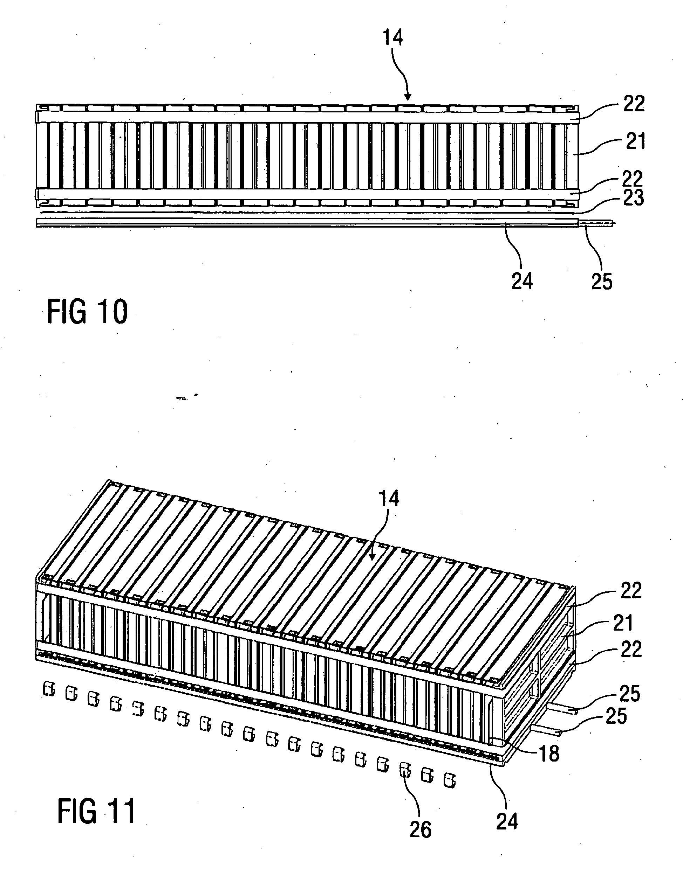

Figur 10 zeigt schematisch eine Seitenansicht eines Zellblocks 14 mit daran angeordneten Druckbrillen 21 und Spannmittel 22, der Wärmeleitfolie 23 und einer Kühlplatte 24.

Figur 11 zeigt schematisch eine Explosionsdarstellung eines Zellblocks 14 mit daran angeordneter Kühlplatte 24 und Spannklemmen 26.

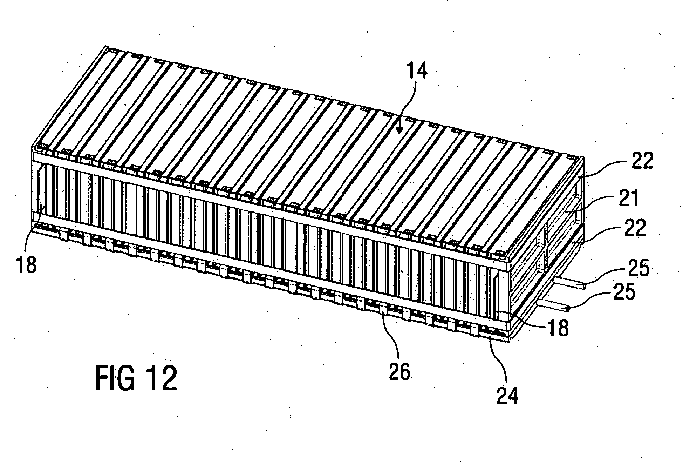

In Figur 12 ist schematisch eine perspektivische Darstellung eines Zellblocks 14 mit daran mittels einer Mehrzahl von Spannklemmen 26 angeordneter Kühlplatte 24 dargestellt. Zur reversiblen mechanischen und thermischen Koppelung des Zellblocks 14 mit der Kühlplatte 24 ist die Kühlplatte 24 mittels einer Mehrzahl von herkömmlichen Spannklemmen 26 am Zellblock 14 befestigt. Dabei greifen die Spannklemmen 26 in entsprechend ausgeformte, nicht näher dargestellte Aussparungen und/oder Nute der Kühlplatte 24 und des Zellblocks 14 ein und verpressen Kühlplatte 24 und Zellblock 14.

### Bezugszeichenliste

- 1: Einzelzelle
- 2: erste Gehäuseseitenwand
- 3: zweite Gehäuseseitenwand
- 4: Rahmen
- 5: Schalenflansch
- 6: Isolationsmittel
- 7: Elektrodenstapel
- 8: Aussparung
- 9: Zellinneres
- 10: Schalenboden
- 11: Polkontaktfahne
- 12: Flanschbereich
- 13: Abschnitt
- 14: Zellblock
- 15: Sonotrode
- 16: Amboss
- 17: Schweißpunkt
- 18: Hochvoltkontakt
- 19: Verlängerung
- 20: abgewinkelter Abschnitt
- 21: Druckbrille
- 22: Spannmittel
- 23: Wärmeleitfolie
- 24: Kühlplatte
- 25: Anschlusselement
- 26: Spannklemme

## Patentansprüche

1. Einzelzelle (1) für eine Batterie mit einem innerhalb eines Zellengehäuses angeordneten Elektrodenstapel (7), wobei das Zellengehäuse aus zwei elektrisch leitenden, im Wesentlichen parallel gegenüberliegend angeordneten und schalenförmig mit einem randseitig umlaufenden Schalenflansch (5) ausgebildeten Gehäuseseitenwänden (2, 3) ausgeformt ist, wobei die Schalenflansche (5) unter Ausbildung eines Flanschbereichs (12) stoffschlüssig miteinander verbunden und elektrisch voneinander isoliert sind, wobei Polkontaktfahnen (11) des Elektrodenstapels (7) elektrisch leitend mit den Gehäuseseitenwänden (2, 3) verbunden sind,
wobei zumindest eine der Gehäuseseitenwände (2, 3) den Flanschbereich (12) zumindest einer Gehäusekante des Zellengehäuses zumindest abschnittsweise überragend ausgebildet ist, wobei der den Flanschbereich (12) überragende Abschnitt (13) der Gehäuseseitenwand (2, 3) in Richtung eines Zellinneren (9) und in Richtung eines Schalenbodens (10) der Gehäuseseitenwand (2, 3) abgewinkelt ist und im abgewinkelten Zustand den betreffenden Schalenboden (10) um einen vorgebbaren Wert überragt
**dadurch gekennzeichnet, dass** die Gehäuseseitenwand (2, 3) an zwei gegenüberliegenden Gehäusekanten des Zellengehäuses zumindest abschnittsweise den Flanschbereich (12) überragend ausgebildet ist.

## Claims

1. Single cell (1) for a battery, comprising an electrode stack (7) located in a cell housing, the cell housing being formed from two electrically conductive housing side walls (2, 3), which are arranged in parallel opposite one another and designed to be tray-shaped with a continuous tray flange (5) extending around the edges, wherein the tray flanges (5) are joined to one another by adhesive force while forming a flange region (12) and electrically insulated against one another, terminal contact tabs (11) of the electrode stack (7) being connected to the housing side walls (2, 3) in an electrically conductive manner,
wherein at least one of the housing side walls (2, 3) is designed to project beyond at least a section of the flange region (12) of at least one housing edge of the cell housing, wherein the section (13) of the housing side wall (2, 3) which projects beyond the flange region (12) is angled in the direction of a cell interior (9) and in the direction of a tray base (10) of the housing side wall (2, 3) and in the angled state projects beyond the respective tray base (10) by a presettable value,
**characterised in that** the housing side wall (2, 3) is designed to project beyond at least a section of the flange region (12) at two opposite housing edges of the cell housing.

## Revendications

1. Élément individuel (1) pour une batterie doté d'un assemblage d'électrodes (7) disposé à l'intérieur d'un boîtier d'éléments, le boîtier d'éléments étant formé par deux parois latérales de boîtier (2, 3) électro-conductrices, essentiellement parallèles, disposées en regard et conçues en forme de coque ayant un bord conchoïdal périphérique (5), les bords (5) conchoïdaux étant reliés par liaison de matière en formant ainsi une zone de bord (12) et étant électriquement isolés l'un de l'autre; les cosses de contact (11) de l'assemblage d'électrodes (7) étant reliées électriquement aux parois latérales de boîtier (2, 3), au moins une des parois latérales de boîtier (2, 3) faisant, au moins par endroits, saillie de la zone de bord (12) d'au moins un rebord de boîtier d'éléments, la section (13) de la paroi latérale de boîtier (2, 3), faisant saillie de la zone de bord (12), étant coudée en direction d'un espace intérieur d'élément (9) et en direction d'un fond de coque (10) de la paroi latérale de boîtier (2, 3) et dans un état coudé le corps de coque concerné (10) dépasse d'une valeur prédéfinie, **caractérisé en ce que** la paroi latérale de boîtier (2, 3) sur deux rebords du boîtier d'éléments en regard l'un de l'autre dépasse au moins partiellement la zone de bord (12).
